(19) Europäisches Patentamt / European Patent Office / Office européen des brevets

(11) **EP 2 365 603 A2**

(12) **EUROPEAN PATENT APPLICATION**

(43) Date of publication:
**14.09.2011 Bulletin 2011/37**

(51) Int Cl.:
*H02J 7/00* (2006.01)    *B60L 11/18* (2006.01)
*B60R 16/033* (2006.01)

(21) Application number: **11154495.3**

(22) Date of filing: **15.02.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **16.02.2010  JP 2010031460**

(71) Applicant: **OMRON Automotive Electronics Co.,
Ltd.
Komaki, Aichi 485-0802 (JP)**

(72) Inventors:
• **Hachiya, Koji**
  **Aichi 485-0802 (JP)**
• **Ido, Yusaku**
  **Aichi 485-0802 (JP)**
• **Omoto, Yasumichi**
  **Aichi 485-0802 (JP)**

(74) Representative: **Giovannini, Francesca et al
Osha Liang
32, avenue de l'Opéra
F-75002 Paris (FR)**

(54) **Power supply system and power supply control method for hybrid and electric vehicles**

(57)    The present invention relates to a power supply system (1) comprising a first battery (11) for supplying an electric power at first voltage, a second battery (15) for supplying an electric power at second voltage lower than the first voltage, a voltage converting unit (13) connected to the first battery (11) and to the second battery (15), and intended to receive the electric current from the first battery (11), to convert the first voltage of the electric current into the second voltage, and then to supply the electric current to the second battery (15), a measuring unit (12) for measuring a temperature of the first battery (11), one or a plurality of first loads (14A) driven by the second battery (15), one or a plurality of second loads (14B, 14C) driven by the second battery (15), and a control unit (17) for driving in priority the first loads (14A) based on an electric power amount that the first battery (11) is able to output and on an electric power amount required by a drive motor (16) for driving a vehicle, when the temperature of the first battery (11) is not higher than a predetermined temperature.

FIG. 2

**EP 2 365 603 A2**

**Description**

BACKGROUND OF THE INVENTION

1. TECHNICAL FIELD

The present invention relates to a power supply system and a power supply control method, particularly to a power supply system capable of extending the life of a high voltage battery while ensuring minimum electric power required for vehicle actions, and a power supply control method.

2. RELATED ART

In general, it is known that in an environment where an external temperature is low, internal resistance is radically increased and a discharge ability is lowered in a battery (for example, refer to "Discharge Temperature Characteristics" on the website of BAYSUN Co., Ltd. [URL: http://www.baysun.net/lithium/lithium10.html]).

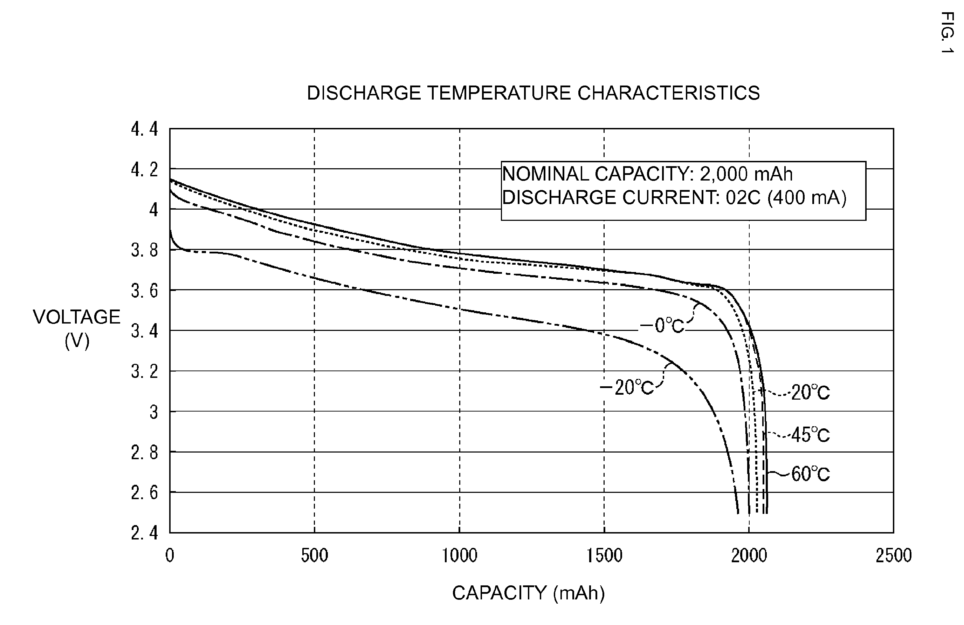

Fig. 1 shows discharge characteristics due to a difference in an environmental temperature of a lithium ion battery having nominal capacity of 2,000 mAh (discharge temperature characteristics) disclosed in the above website. The horizontal axis of Fig. 1 indicates discharge capacity, and the vertical axis indicates cell voltage. Referring to Fig. 1, it is found that the internal resistance is radically increased and the discharge ability is lowered with the temperature of 0°C or lower. Therefore, even with a high voltage battery in a hybrid vehicle or the like, in an environment where the external temperature is low such as a cold region, a load is increased due to the increased internal resistance, and electric power to be outputted is reduced due to the lowered voltage of the high voltage battery. When the electric power to be outputted is reduced, the electric power required for units actuated as loads of the high voltage battery cannot be ensured, so that actions of the units are sometimes influenced. Since the load is increased due to the increased internal resistance, the life of the high voltage battery is shortened.
Many of hybrid vehicles and electric vehicles require both high-voltage power for directly driving the vehicles themselves, and low-voltage power for driving various in-vehicle devices. This is because the in-vehicle devices are conventionally designed to be driven by voltage (such as 12 V) of a low voltage battery mounted in the vehicles when mounted on gasoline-powered vehicles or the like, and there is still high demand and need for installing and continuing to use the conventional in-vehicle devices in the electric vehicles or the like.
In such a way, as a configuration for supplying both the high-voltage power and the low-voltage power in the vehicles, both the high voltage battery and the low voltage battery are generally mounted in the electric vehicles or the like. Further, in order to supplement the electric power to the low voltage battery, there is a known configuration that a DC/DC converter is mounted to convert the voltage, and then the electric power is supplied from the high voltage battery to the low voltage battery.
In the electric vehicles or the like with such a configuration, as a measure for not unnecessarily shortening the life of the high voltage battery, a technology of starting up a DC/DC converter at low voltage particularly at the time of a low temperature, and then controlling to drive at high voltage, so as to protect the high voltage battery is disclosed (for example, refer to Japanese Patent No. 3566252).

SUMMARY

However, with the method of Japanese Patent No. 3566252, "controlling computers and auxiliary devices", various in-vehicle devices are understood as one. Among the in-vehicle devices, there are devices such as an engine ECU (Electronic Control Unit) required to be preferentially driven even when a remaining amount of the battery is low, and devices such as audio devices to be given relatively low priority of drive. However, the method of Japanese Patent No. 3566252 cannot perform control such as preferential drive of part of the in-vehicle devices to be driven.
The present invention has been devised to solve the above problem and an object thereof is to extend the life of a high voltage battery while ensuring minimum electric power required for vehicle actions.
In accordance with a first aspect of the present invention, a power supply system comprises a first battery for supplying an electric power at a first voltage, a second battery for supplying an electric power at a second voltage lower than the first voltage, a voltage converting unit connected to the first battery and the second battery, and intended to receive an electric current from the first battery, to convert the first voltage of the electric current into the second voltage, and then to supply the electric current to the second battery, a measuring unit for measuring a temperature of the first battery, one or a plurality of first loads driven by the second battery, one or a plurality of second loads driven by the second battery, and a control unit for driving in priority the first loads based on an electric power amount that the first battery is able to output and on an electric power amount required by a drive motor for driving a vehicle, when the temperature of the first battery is not higher than a predetermined temperature.

In the power supply system according to the first aspect of the present invention, the temperature of the first battery is measured, and when the temperature of the first battery is not higher than the predetermined temperature, the first loads of the first priority among the first and second loads driven by the second battery are driven in priority based on the electric power amount that the first battery is able to output and on the electric power amount required by the drive motor for driving the vehicle.

Therefore, when the temperature of the first battery is not higher than the predetermined temperature, the supply of the electric power to the second loads is restricted, so that the electric power supplied by the first battery to devices other than the drive motor is suppressed, and the first battery is thus not excessively operated. Thereby, the output electric power of the first battery can be suppressed, so that the life of the first battery can be extended while ensuring the minimum electric power required for the vehicle actions.

The first battery is for example formed by a battery for supplying the electric power at a voltage such as 144 V, 300 V, and 334 V. The second battery is for example formed by a battery for supplying an electric power at a voltage such as 12 V. The voltage converting unit is for example formed by a DC/DC converter. The measuring unit is for example formed by a temperature sensor The first loads are for example formed by an EPSECU, an engine ECU, and the like. The second loads are for example formed by an air conditioner, audio devices, a navigation device, and the like. The control unit is for example formed by a CPU serving as a controller, an ECU, a BMU, or the like.

According to an embodiment of the present invention, the control unit may restrict the supply of the electric power to a part of a plurality of loads driven by the first battery other than the drive motor based only on the electric power amount that the first battery is able to output, when the temperature of the first battery is higher than the predetermined temperature.

Thereby, when the electric power amount that the first battery is able to output is low, the output electric power of the first battery can be suppressed, so that the life of the first battery can be extended while ensuring the minimum electric power required for the vehicle actions.

According to a further embodiment of the present invention, the control unit may suppress the output voltage of the voltage converting unit in accordance with at least a state of charge of the second battery and a maximum voltage among the drive voltage of a plurality of loads driven by the first battery other than the drive motor.

Thereby, the consumed electric power due to the plurality of loads can be suppressed.

According to a second aspect of the present invention, a power supply control method in a power supply system comprising a first battery for supplying an electric power at a first voltage, a second battery for supplying an electric power at a second voltage lower than the first voltage, a voltage converting unit connected to the first battery and the second battery, and intended to receive the electric current from the first battery, to convert the first voltage of the electric current into the second voltage, and then to supply the electric current to the second battery, a measuring unit for measuring a temperature of the first battery, one or a plurality of first loads driven by the second battery, one or a plurality of second loads driven by the second battery, and a control unit for controlling the drive of the first and second loads, wherein the power supply control method includes the step of driving in priority the first loads by the control unit based on an electric power amount that the first battery is able to output and on an electric power amount required by a drive motor for driving a vehicle, when the temperature of the first battery is not higher than a predetermined temperature.

In the power supply control method according to the second aspect of the present invention, the temperature of the first battery is measured, and when the temperature of the first battery is not higher than the predetermined temperature, the first loads are driven in priority based on the electric power amount that the first battery is able to output and on the electric power amount required by the drive motor for driving the vehicle.

Therefore, when the temperature of the first battery is not higher than the predetermined temperature, the supply of the electric power to the second loads of the second priority is restricted, so that the electric power supplied by the first battery to devices other than the drive motor is suppressed, and the first battery is thus not excessively operated. Thereby, the output electric power of the first battery is suppressed, so that the life of the first battery can be extended while ensuring the minimum electric power required for the vehicle actions.

The control unit for executing this step is for example formed by a CPU (Central Processing Unit), an ECU, a BMU (Battery Management Unit), or the like.

According to this second aspect of the present invention, the life of the high voltage battery can be extended while ensuring the minimum electric power required for the vehicle actions.

BRIEF DESCRIPTION OF THE DRAWINGS

Fig. 1 is a graph showing the discharge temperature characteristics of a battery;
Fig. 2 is a block diagram showing a configuration example of a power supply system according to an embodiment of the present invention;

Fig. 3 is a flowchart illustrating a first power supply control processing according to an embodiment of the present invention;

Fig. 4 is a table relating to a first action load restriction processing of Fig. 3;

Fig. 5 is a flowchart illustrating the first action load restriction processing of Fig. 3;

Fig. 6 is a table relating to a second action load restriction processing of Fig. 3;

Fig. 7 is a flowchart illustrating the second action load restriction processing of Fig. 3;

Fig. 8 is a flowchart illustrating a second power supply control processing according to an embodiment of the present invention;

Fig. 9 is a flowchart illustrating a third power supply control processing according to an embodiment of the present invention; and

Fig. 10 is a block diagram showing a configuration example of a computer according to an embodiment of the present invention.

## DETAILED DESCRIPTION

[Configuration Example of a Power Supply System]

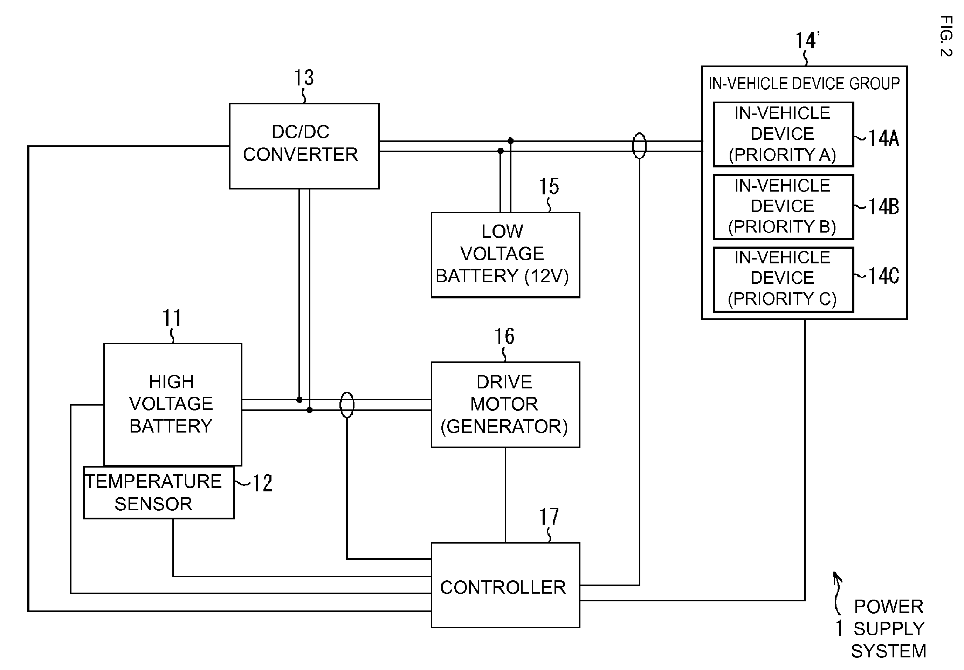

Fig. 2 is a block diagram showing a configuration example of a power supply system according to an embodiment of the present invention.

A power supply system 1 of Fig. 2 is a system for controlling a power supply of an electric vehicle running by electric power stored in a battery. It should be noted that in Fig. 2, an electric power supply line is shown by a double line, and a control line is shown by one solid line.

The power supply system 1 is formed by a high voltage battery 11, a temperature sensor 12, a DC/DC converter 13, an in-vehicle device group 14', a low voltage battery 15, a drive motor 16, and a controller 17.

The high voltage battery 11 is a major power supply of the electric vehicle and supplies (discharges) the stored electric power if necessary. The high voltage battery 11 may adopt output voltage of for example 144V, 300V, 334V, or the like.

The temperature sensor 12 is installed in the vicinity of the high voltage battery 11, measures a temperature of the high voltage battery 11, and outputs the temperature to the controller 17. It should be noted that although the temperature of the high voltage battery 11 is directly measured with using the temperature sensor 12 in the present embodiment, the temperature sensor 12 may be attached to another place where the temperature sensor 12 is more easily installed, so that the temperature of the high voltage battery 11 is indirectly measured. A method of indirectly estimating the temperature of the high voltage battery 11 by predetermined calculation without using the temperature sensor is also available.

The DC/DC converter 13 is connected to the high voltage battery 11 and the low voltage battery 15, receives an electric current from the high voltage battery 11, converts first voltage serving as output voltage of the high voltage battery 11 into second voltage serving as output voltage of the low voltage battery 15, and then supplies the electric current to the low voltage battery 15. That is, the DC/DC converter 13 converts the electric power supplied from the high voltage battery 11 into the electric power to be supplied to in-vehicle devices 14 actuated at low voltage. Since many of the current in-vehicle devices 14 are driven at 12 V, the DC/DC converter 13 converts the voltage into power supply voltage of 12 V in the present embodiment. However, the voltage to be converted is not limited to 12 V but can be appropriately set in accordance with drive voltage of the in-vehicle devices 14. The electric power with the voltage converted by the DC/DC converter 13 is supplied to the low voltage battery 15 and the in-vehicle device group 14'.

The in-vehicle device group 14' is a collection of the plural in-vehicle devices 14 actuated at the power supply voltage of 12 V. In the present embodiment, the in-vehicle devices 14 belonging to the in-vehicle device group 14' are classified into in-vehicle devices 14A, in-vehicle devices 14B, and in-vehicle devices 14C in accordance with priority of actions thereof. The in-vehicle devices 14A are of the highest priority (priority A) and serve as devices essential to safe vehicle actions. The in-vehicle devices 14A correspond to for example an EPSECU (Electric Power Steering ECU), an engine ECU, and the like. The in-vehicle devices 14B are of the second highest priority (priority B) and serve as devices necessary for comfortable vehicle actions. The in-vehicle devices 14B correspond to for example an air conditioner (so-called air-con) and the like. The in-vehicle devices 14C are of the lowest priority (priority C) and serve as devices least influential to a user other than the in-vehicle devices 14A and 14B. The in-vehicle devices 14C correspond to for example audio devices, a navigation device, and the like. It should be noted that first loads of claim 1 correspond to the in-vehicle devices 14A in the present embodiment, and second loads of claim 1 correspond to the in-vehicle devices 14B and 14C in the present embodiment. The priority of the second loads is further divided into two, and thus the in-vehicle devices are divided into the in-vehicle devices 14B and 14C in accordance with the priority. However, the priority can be further divided if necessary.

The in-vehicle devices 14A to 14C are action loads of the high voltage battery 11 for receiving the electric power supplied via the DC/DC converter 13 or the low voltage battery 15, and performing predetermined actions.

The low voltage battery 15 stores the electric power supplied from the DC/DC converter 13 and also supplies the electric power to the in-vehicle devices 14A to 14C.

The drive motor 16 is a maximum load (action load) actuated by the high voltage battery 11 and a motor for driving the electric vehicle. The drive motor 16 corresponds to an engine of a vehicle driven by gasoline as fuel. The drive motor 16 has generator functions of generating the electric power and charging the high voltage battery 11 at the time of braking the vehicle, and collecting regenerative energy. Therefore, the drive motor 16 will also be called as the drive motor generator 16 hereinafter.

The controller 17 controls the drive motor 16. For example, the controller 17 controls an output of the drive motor 16, and measures a generation amount of the drive motor (generator) 16. The controller 17 manages output electric power of the high voltage battery 11 and the DC/DC converter 13, and controls to restrict the actions of part of the in-vehicle device group 14' if necessary. It should be noted that the controller 17 can acquire various information from the ECU belonging to the in-vehicle devices 14A for controlling units if necessary.

In the power supply system 1 formed as above, when the temperature of the high voltage battery 11 becomes a low temperature (such as 0°C or lower), the voltage of the high voltage battery is lowered, so that the electric power to be outputted is reduced. In this case, the controller 17 of the power supply system 1 performs power supply control processing of restricting the actions of part of the in-vehicle device group 14' in accordance with a SOC (state of charge) state of the high voltage battery 11 and an electric power required amount of the drive motor 16.

Hereinafter, the power supply control processing performed by the power supply system 1 will be described with reference to the drawings.

[First Embodiment]

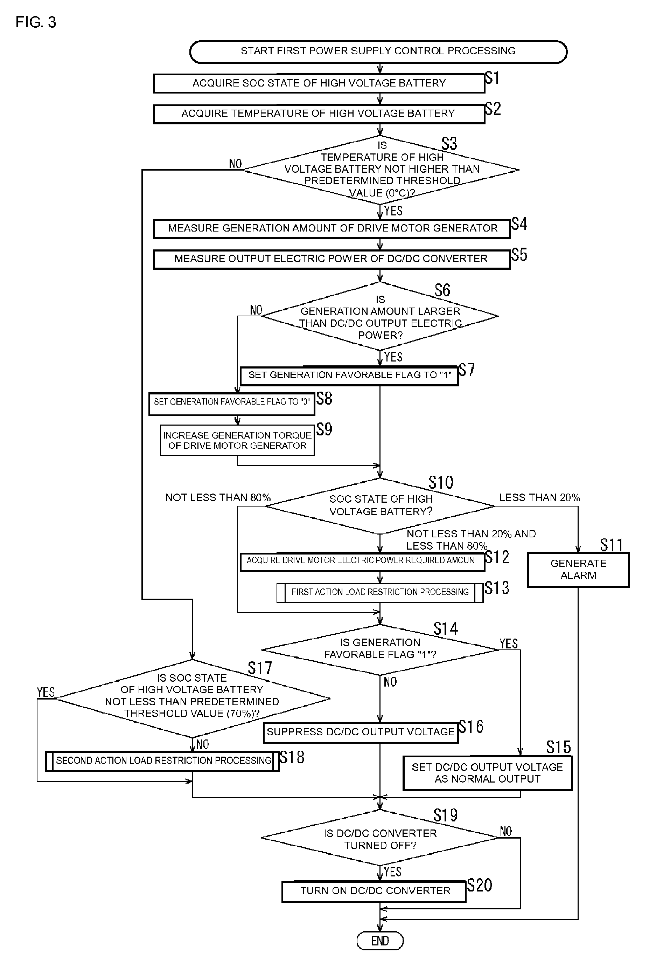

Firstly, first power supply control processing will be described with reference to a flowchart of Fig. 3.

In the first power supply control processing, an electric power amount that the high voltage battery 11 is able to output (hereinafter, appropriately called as the high voltage battery electric power amount) is calculated from the SOC state of the high voltage battery 11, and the actions of part of the in-vehicle device group 14' serving as loads of the DC/DC converter 13 are restricted in accordance with the high voltage battery electric power amount and the electric power required amount of the drive motor 16 (hereinafter, appropriately called as the drive motor electric power required amount).

Firstly, in Step S1, the controller 17 acquires the SOC (state of charge) state from the high voltage battery 11. The controller 17 then calculates the high voltage battery electric power amount from the acquired SOC state of the high voltage battery 11. It should be noted that an electric power amount in a fully charged state of the high voltage battery 11 is already known. The SOC state of the high voltage battery 11 may be indirectly acquired from the ECU for managing the high voltage battery 11.

In Step S2, the controller 17 acquires the temperature of the high voltage battery 11 by acquiring a sensor value of the temperature sensor 12.

In Step S3, the controller 17 determines whether or not the temperature of the high voltage battery 11 is not higher than a predetermined threshold value. The threshold value is 0°C. That is, in Step S3, the controller 17 determines whether or not the temperature of the high voltage battery 11 is not higher than 0°C. It should be noted that the temperature serving as the threshold value in Step S3 can be appropriately determined in accordance with action setting.

When it is determined that the temperature of the high voltage battery 11 is not higher than 0°C in Step S3, the flow proceeds to Step S4, and the controller 17 measures the generation amount of the drive motor generator 16, and in Step S5, measures the output electric power of the DC/DC converter 13.

In Step S6, the controller 17 determines whether or not the generation amount of the drive motor generator 16 is larger than the output electric power of the DC/DC converter 13.

When it is determined that the generation amount of the drive motor generator 16 is larger than the output electric power of the DC/DC converter 13 in Step S6, the flow proceeds to Step S7, and the controller 17 sets an internal generation favorable flag to "1". The generation favorable flag "1" indicates that the electric power is sufficiently generated, and a generation favorable flag "0" indicates that the electric power is not sufficiently generated.

Meanwhile, when it is determined that the generation amount of the drive motor generator 16 is not larger than the output electric power of the DC/DC converter 13 in Step S6, the flow proceeds to Step S8, and the controller 17 sets the internal generation favorable flag to "0". In Step S9, the controller 17 increases generation torque of the drive motor generator 16.

After Step S7 or S9, in Step S10, the controller 17 determines in which range of less than 20%, not less than 20% to less than 80%, or not less than 80% the SOC state of the high voltage battery 11 is included.

When it is determined that the SOC state of the high voltage battery 11 is less than 20% in Step S10, the flow proceeds to Step S11, and the controller 17 generates an alarm indicating that the high voltage battery electric power amount is in short with using a voice generating device, an indicator, or the like (not shown).

Meanwhile, when it is determined that the SOC state of the high voltage battery 11 is not less than 20% and less than 80% in Step S10, the flow proceeds to Step S12, and the controller 17 acquires the drive motor electric power required amount from the drive motor 16. It should be noted that the drive motor electric power required amount may be acquired from the ECU for controlling the drive motor 16.

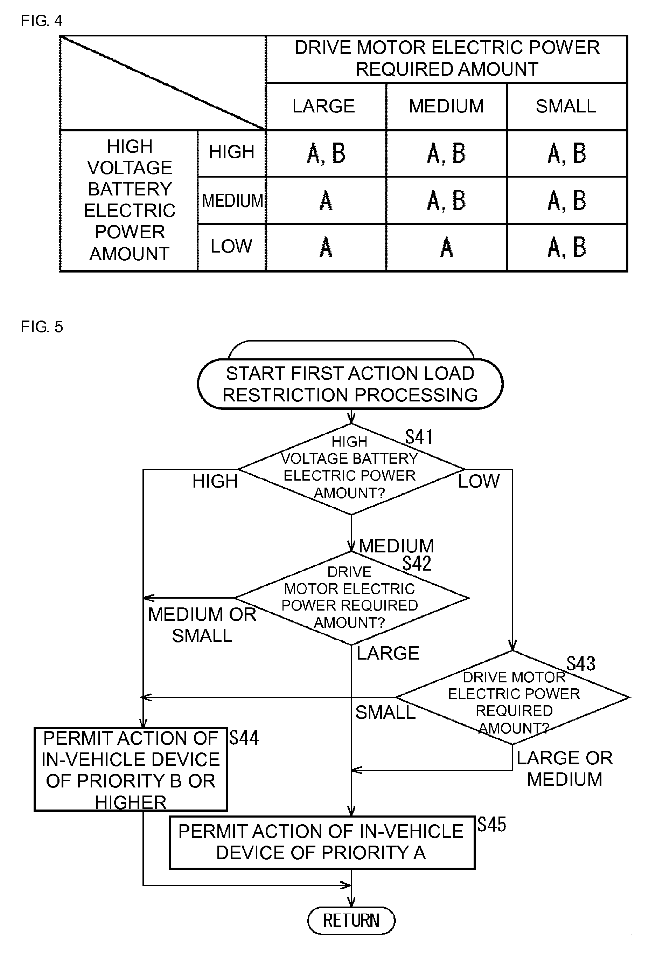

In Step S13, the controller 17 executes the first action load restriction processing of restricting the actions of part of the in-vehicle devices 14A to 14C serving as the action loads in accordance with the high voltage battery electric power amount calculated from the SOC state of the high voltage battery 11 and the acquired drive motor electric power required amount. Details of this processing will be described later with reference to Figs. 4 and 5.

Meanwhile, when it is determined that the SOC state of the high voltage battery 11 is not less than 80% in Step S10, the actions of the in-vehicle devices 14A to 14C are not particularly restricted, and the flow proceeds to Step S14.

In Step S14, the controller 17 determines whether or not the generation favorable flag is "1" .

When it is determined that the generation favorable flag is "1" in Step S14, the flow proceeds to Step S15, and the controller 17 sets the DC/DC converter 13 so that the DC/DC output voltage serves as an normal output.

Meanwhile, when it is determined that the generation favorable flag is "0" in Step S 14, the flow proceeds to Step S 16, and the controller 17 sets the DC/DC converter 13 so that the DC/DC output voltage is suppressed.

How to determine the DC/DC output voltage after suppression when the controller 17 suppresses the DC/DC output voltage will be described.

The controller 17 acquires a SOC state of the low voltage battery 15 and DC/DC load required voltage Vreq from a predetermined ECU. The DC/DC load required voltage Vreq is maximum voltage among drive voltage of the in-vehicle devices 14 to be actuated.

The controller 17 can determine DC/DC output voltage Vout after the suppression as follows with using the SOC state of the low voltage battery 15, the DC/DC load required voltage Vreq, and a shortage amount of the generation amount of the motor generator 16.

$$\text{Vout'} = K + (k \times \text{low voltage SOC state}) \times (p \times (|P - \text{Pgen}|)(\text{when "Vreq > Vout'" is}$$

established, a value of Vreq serves as a value of Vout, and when "Vreq > Vout' " is not

established, a value of Vout' serves as the value of Vout.) ...... (1)

wherein K, k, p are predetermined constant numbers. P indicates a generation target value, and Pgen indicates the generation amount of the motor generator 16.

That is, the DC/DC output voltage Vout after the suppression can be calculated as the sum determined by adding the constant number K to a result of multiplying an absolute value of the generation target value P and the motor generator generation amount Pgen multiplied by p, and the SOC state of the low voltage battery 15 multiplied by k. However, when the calculated DC/DC output voltage Vout is smaller than the DC/DC load required voltage Vreq, the DC/DC load required voltage Vreq serves as the DC/DC output voltage Vout.

In such a way, the controller 17 suppresses the DC/DC output voltage with using the SOC state of the low voltage battery 15, the DC/DC load required voltage Vreq, and the shortage amount of the generation amount of the motor generator 16. Thus, consumed electric power by the in-vehicle devices 14 can be suppressed.

Meanwhile, when it is determined that the temperature of the high voltage battery 11 is higher than 0°C in Step S3, the flow proceeds to Step S17, and the controller 17 determines whether or not the SOC state of the high voltage battery 11 is not less than a predetermined threshold value. The threshold value is for example 70%. Therefore, in Step S17, the controller 17 determines whether or not the SOC state of the high voltage battery 11 is not less than 70%.

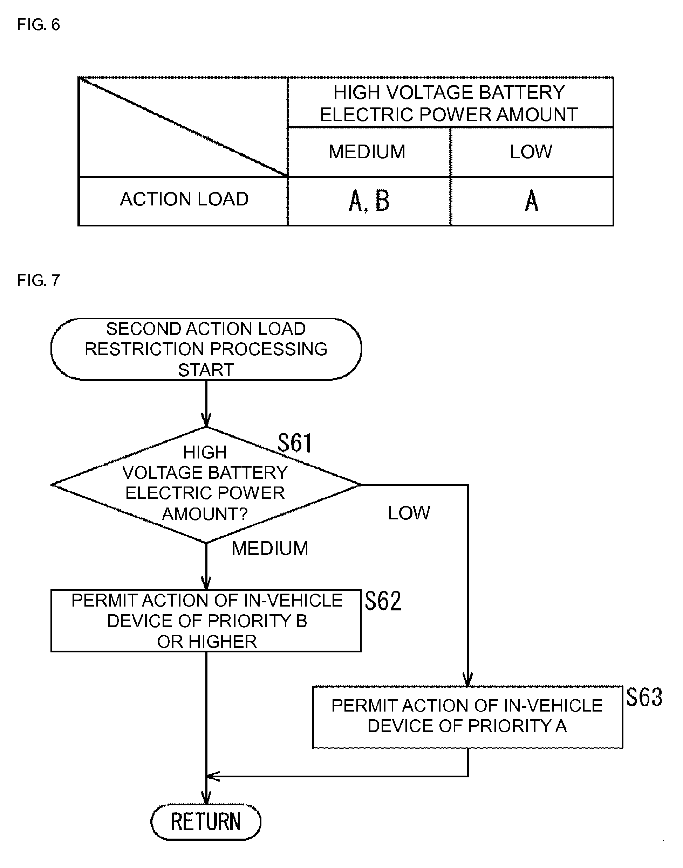

When it is determined that the SOC state of the high voltage battery 11 is not less than 70% in Step S 17, the flow proceeds to Step S18, and the controller 17 executes second action load restriction processing of restricting the actions of the action loads in accordance with the high voltage battery electric power amount calculated from the SOC state of the high voltage battery 11. Details of this processing will be described later with reference to Figs. 6 and 7.

Meanwhile, when it is determined that the SOC state of the high voltage battery 11 is not less than 70% in Step S17, the actions of the action loads are not particularly restricted, and the flow proceeds to Step S 19.

After the action load restriction processing of restricting the actions of the action loads in accordance with the high voltage battery electric power amount calculated from the SOC state of the high voltage battery 11 is performed if necessary by the above processing in Steps S3 to S18, the controller 17 determines whether or not the DC/DC converter 13 is turned off in Step S19.

When it is determined that the DC/DC converter 13 is turned off in Step S19, in other words, when there is no output from the DC/DC converter 13, the controller 17 turns on the DC/DC converter 13 in Step S20, and finishes the processing. Meanwhile, when the DC/DC converter 13 is turned on in Step S 19, the processing is finished straightaway.

The above first power supply control processing is continuously executed irrespective of the time such as idling and running of the vehicle. That is, the above processing in Step S1 to S20 is repeatedly executed.

[Description of First Action Load Restriction Processing]

Next, the first action load restriction processing in Step S13 of Fig. 3 will be described with reference to Figs. 4 and 5.

In the first action load restriction processing, the actions of part of the in-vehicle devices 14A to 14C are restricted in accordance with the high voltage battery electric power amount and the drive motor electric power required amount.

Fig. 4 is a table for determining the in-vehicle devices 14 to be restricted in accordance with volumes of the high voltage battery electric power amount and the drive motor electric power required amount.

The first action load restriction processing is executed when it is determined that the SOC state of the high voltage battery 11 is not less than 20% and less than 80% in Step S10 of Fig. 3. The controller 17 respectively classifies the high voltage battery electric power amount calculated from the SOC state of the high voltage battery 11 into three levels of "high", "medium", and "low", and the drive motor electric power required amount into three levels of "large", "medium", and "small". For example, the controller 17 regards the high voltage battery electric power amount when the SOC state of the high voltage battery 11 is not less than 70% and less than 80% as the "high" level, the high voltage battery electric power amount when the SOC state of the high voltage battery 11 is not less than 40% and less than 70% as the "medium" level, and the high voltage battery electric power amount when the SOC state of the high voltage battery 11 is not less than 20% and less than 40% as the "low" level. The controller 17 regards the drive motor electric power required amount not less than 50% of rated electric power of the high voltage battery 11 as the "large" level, the drive motor electric power required amount not less than 20% and less than 50% of the rated electric power as the "medium level", and the drive motor electric power required amount less than 20% of the rated electric power as the "small" level.

It should be noted that in the table of Fig. 4, "A" indicates that the in-vehicle devices 14A of the priority A are actuated, and "B" indicates that the in-vehicle devices 14B of the priority B are actuated.

Therefore, according to the table of Fig. 4, when the high voltage battery electric power amount is at the "high" level, the controller 17 supplies the electric power only to the in-vehicle devices 14A of the priority A and the in-vehicle devices 14B of the priority B irrespective of the drive motor electric power required amount, so as to only actuate the in-vehicle devices 14A of the priority A and the in-vehicle devices 14B of the priority B. In other words, the controller 17 restricts supply of the electric power to the in-vehicle devices 14C of the priority C.

When the high voltage battery electric power amount is at the "medium" level and the drive motor electric power required amount is at the "medium" or "small" level, or when the high voltage battery electric power amount is at the "low" level and the drive motor electric power required amount is at the "small" level, the controller 17 also only actuates the in-vehicle devices 14A of the priority A and the in-vehicle devices 14B of the priority B.

Meanwhile, when the high voltage battery electric power amount is at the "medium" level and the drive motor electric power required amount is at the "large" level, or when the high voltage battery electric power amount is at the "low" level and the drive motor electric power required amount is at the "large" or "medium" level, the controller 17 supplies the electric power only to the in-vehicle devices 14A of the priority A, so as to only actuate the in-vehicle devices 14A of the priority A. In other words, the controller 17 restricts the supply of the electric power to the in-vehicle devices 14B and 14C of the priority B and C.

Fig. 5 is a flowchart of the first action load restriction processing of executing processing for restricting the actions based on the table of Fig. 4.

In Step S41, the controller 17 determines to which level of "high", "medium", or "low" the high voltage battery electric power amount belongs.

When it is determined that the high voltage battery electric power amount is at the "high" level in Step S41, the flow proceeds to Step S44.

Meanwhile, it is determined that the high voltage battery electric power amount is at the "medium" level in Step S41, the flow proceeds to Step S42, and the controller 17 determines at which level of "medium" or "small", or "large" the drive motor electric power required amount is.

When it is determined that the drive motor electric power required amount is at the "medium" or "small" level in Step S42, the flow proceeds to Step S44, and when it is determined that the drive motor electric power required amount is at the "large" level, the flow proceeds to Step S45.

It is determined that the high voltage battery electric power amount is at the "low" level in Step S41, the flow proceeds to Step S43, and the controller 17 determines at which level of "small", or "large" or "medium" the drive motor electric power required amount is.

When it is determined that the drive motor electric power required amount is at the "small" level in Step S43, the flow proceeds to Step S44, and when it is determined that the drive motor electric power required amount is at the "large" or "medium" level, the flow proceeds to Step S45.

In Step S44, the controller 17 permits the actions of the in-vehicle devices 14 of the priority B or higher. That is, the controller 17 supplies the electric power only to the in-vehicle devices 14A and the in-vehicle devices 14B, so as to only actuate the in-vehicle devices 14A and the in-vehicle devices 14B.

In Step S45, the controller 17 permits the actions of the in-vehicle devices 14 of the priority A. That is, the controller 17 supplies the electric power only to the in-vehicle devices 14A, so as to only actuate the in-vehicle devices 14A.

By the processing in Step S44 or S45, the first action load restriction processing is finished, and the flow returns to the first power supply control processing of Fig. 3.

By the above processing, the first action load restriction processing corresponding to the table of Fig. 4 can be executed.

[Another Example of First Action Load Restriction Processing]

Next, another example of the first action load restriction processing will be described.

In the first action load restriction processing of Fig. 5, the table of Fig. 4 is referred with the high voltage battery electric power amount and the drive motor electric power required amount at the present moment, so as to determine which in-vehicle devices 14 are restricted.

Meanwhile, in another example of the first action load restriction processing described below, the controller 17 determines which in-vehicle devices 14 are restricted based on a calculation result using the high voltage battery electric power amount and the drive motor electric power required amount.

Specifically, the controller 17 determines whether only the in-vehicle devices 14A of the priority A are actuated or only the in-vehicle devices 14A of the priority A and the in-vehicle devices 14B of the priority B are actuated in accordance with the calculation result of the following expression (2).

$$\text{Lvalue} = 1 \times (\text{high voltage battery electric power amount}) - m \times (\text{drive motor electric power required amount}) \ldots (2)$$

wherein 1, m are positive constant numbers. "1 $\times$ (high voltage battery electric power amount)" is always larger than "m $\times$ (drive motor electric power required amount)". Therefore, Lvalue is always a positive value.

The controller 17 calculates Lvalue of the expression (2), only actuates the in-vehicle devices 14A and the in-vehicle devices 14B when Lvalue is larger than a threshold value X (Lvalue > X), and only actuates the in-vehicle devices 14A when Lvalue is not larger than the threshold value X (Lvalue $\leq$ X).

For example, in the expression (2), Lvalue is within a range from 0 to 100. With Fig. 1, the voltage starts lowering drastically from a point over 70% of rated capacity. Thus, when a threshold value of the high voltage battery electric power amount is 70%, a threshold value of the drive motor electric power required amount is 50%. The ground for this is not to use the threshold value of the electric power amount to the upmost limit but to leave some flexibility. That is, the drive motor electric power required amount is within a range from 0 to 50. The threshold value X is 20 (X = 20) from a difference (70-50) between the high voltage battery electric power amount at degrees below freezing serving as 70% of the rated capacity (70), and the threshold value of the drive motor electric power required amount when maximum torque is required serving as 50% (50).

It should be noted that in order to have the value of (1 $\times$ high voltage battery electric power amount) within the range from 0 to 100, and have the value of (m $\times$ drive motor electric power required amount) within the range from 0 to 50, for example when Pb denotes a rated value of the high voltage battery electric power amount, and Tmax denotes a rated value of the drive motor electric power required amount, "1= 100 / Pb" and "m = 50 / Tmax" are available.

[Description of Second Action Load Restriction Processing]

Next, the second action load restriction processing in Step S18 of Fig. 3 will be described with reference to Figs. 6 and 7.

In the second action load restriction processing, the actions of part of the in-vehicle devices 14A to 14C are restricted in accordance with the high voltage battery electric power amount.

Fig. 6 is a table for determining the in-vehicle devices 14 to be restricted in accordance with the high voltage battery electric power amount. "Medium", "low", "A", and "B" in Fig. 6 indicate the same as Fig. 4.

As described above with reference to Fig. 3, the second action load restriction processing is executed when the temperature of the high voltage battery 11 is higher than 0°C and when the SOC state of the high voltage battery 11 is less than 70%. In a state that the temperature of the high voltage battery 11 is not lower than 0°C, as described above with reference to Fig. 1, the electric power that the high voltage battery 11 is able to output is increased.

When the high voltage battery electric power amount at the present moment is at the "medium" level, the controller 17 supplies the electric power to the in-vehicle devices 14A of the priority A and the in-vehicle devices 14B of the priority B, so as to only actuate the in-vehicle devices 14A of the priority A and the in-vehicle devices 14B of the priority B. In other words, the controller 17 restricts the supply of the electric power only to the in-vehicle devices 14C of the priority C.

Meanwhile, when the high voltage battery electric power amount at the present time is at the "low" level, the controller 17 supplies the electric power only to the in-vehicle devices 14A of the priority A, so as to only actuate the in-vehicle devices 14A of the priority A. In other words, the controller 17 restricts the supply of the electric power to the in-vehicle devices 14B and 14C of the priority B and C.

Fig. 7 is a flowchart of the second action load restriction processing based on the table of Fig. 6.

In Step S 61, the controller 17 determines to which level of "medium" or "low" the high voltage battery electric power amount calculated from the SOC state of the high voltage battery 11 belongs.

When it is determined that the high voltage battery electric power amount is at the "medium" level in Step S61, the flow proceeds to Step S62, and the controller 17 permits the actions of the in-vehicle devices 14 of the priority B or higher. That is, the controller 17 supplies the electric power to the in-vehicle devices 14A and the in-vehicle devices 14B, so as to actuate the in-vehicle devices 14A and the in-vehicle devices 14B.

When it is determined that the high voltage battery electric power amount is at the "low" level in Step S61, the flow proceeds to Step S63, and the controller 17 permits the actions of the in-vehicle devices 14 of the priority A. That is, the controller 17 only supplies the electric power to the in-vehicle devices 14A, so as to only actuate the in-vehicle devices 14A.

By the processing in Steps S62 or S63, the second action load restriction processing is finished, and the flow returns to the first power supply control processing of Fig. 3.

According to the first power supply control processing described above, when the temperature of the high voltage battery 11 becomes a low temperature (such as 0°C or lower), the controller 17 preferentially drives the in-vehicle devices 14A of the priority A essential to the safe vehicle actions in accordance with the high voltage battery electric power amount and the drive motor electric power required amount. Thereby, when the high voltage battery electric power amount is low, the output electric power of the high voltage battery 11 can be suppressed. Therefore, the life of the high voltage battery can be extended while ensuring minimum electric power required for the vehicle actions.

[Second Embodiment]

Next, second power supply control processing serving as a second embodiment of the present invention will be described.

In the first power supply control processing, the actions of part of the in-vehicle devices 14 are restricted with using two parameters of the high voltage battery electric power amount and the drive motor electric power required amount, so that the output electric power of the high voltage battery 11 is suppressed.

In the second power supply control processing, the action loads are restricted also in consideration with the SOC state of the low voltage battery 15 and an electric power amount that the low voltage battery 15 is able to output, the electric power amount being calculated by the above SOC state (hereinafter, appropriately called as the low voltage battery electric power amount) in addition to the two parameters of the high voltage battery electric power amount and the drive motor electric power required amount.

This is because the various in-vehicle devices 14 can be actuated by the low voltage battery 15 when the low voltage battery electric power amount is sufficient, but the drive by the low voltage battery 15 is difficult when the low voltage battery electric power amount is in short.

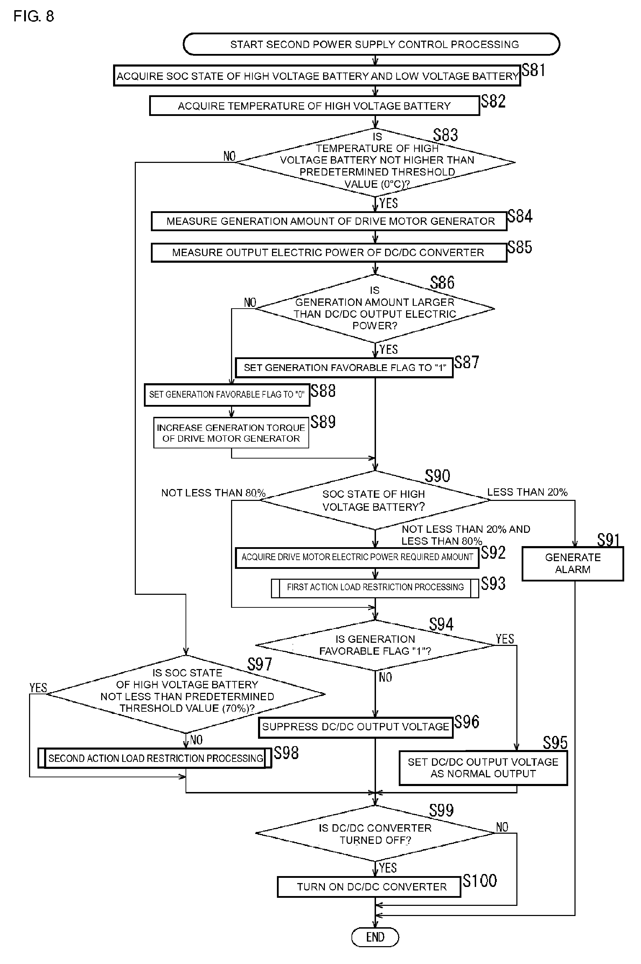

Fig. 8 is a flowchart of the second power supply control processing by the power supply system 1.

The second power supply control processing of Fig. 8 includes processing from Steps S81 to S100, and Steps S81 to S100 respectively correspond to Steps S1 to S20 of Fig. 3.

However, since the action loads are restricted also in consideration with the low voltage battery electric power amount in the second power supply control processing, the steps relating to that part, specifically Steps S81 and S93 are different from Steps S1 and S13 of Fig. 3.

Thus, only Steps S81 and S93 will be described, and description of the remaining steps will be omitted.

In Step S81, the controller 17 acquires the SOC states of the high voltage battery 11 and the low voltage battery 15. The controller 17 calculates the high voltage battery electric power amount from the SOC state of the high voltage battery 11, and also calculates the low voltage battery electric power amount from the SOC state of the low voltage battery 15. It should be noted that the SOC state of the low voltage battery 15 may be indirectly acquired from the ECU for managing the low voltage battery 15 as well as the SOC state of the high voltage battery 11.

In Step S93, the controller 17 executes the first action load restriction processing of restricting the actions of the action loads in accordance with the high voltage battery electric power amount, the low voltage battery electric power amount, and the drive motor electric power required amount. In the first action load restriction processing in the second power supply control processing, the controller determines of which in-vehicle devices 14 the actions are restricted based on a calculation result using an arithmetic expression similar to the expression (2) in the above first power supply control processing.

Specifically, the controller 17 determines whether only the in-vehicle devices 14A of the priority A are actuated or the in-vehicle devices 14A of the priority A and the in-vehicle devices 14B of the priority B are actuated in accordance with the calculation result of the following expression (3).

$$\text{Lvalue} = 1 \times (\text{high voltage battery electric power amount} + \text{low voltage battery electric}$$

$$\text{power amount}) - m \times (\text{drive motor electric power required amount}) \ldots\ldots (3)$$

In the expression (3), "1 × high voltage battery electric power amount)" in the expression (2) becomes " 1 × (high voltage battery electric power amount + low voltage battery electric power amount)" in consideration with the low voltage battery electric power amount. Others are the same.

The controller 17 calculates Lvalue of the expression (3), actuates the in-vehicle devices 14A and the in-vehicle devices 14B when Lvalue is larger than the threshold value X (Lvalue > X), and only actuates the in-vehicle devices 14A when Lvalue is not larger than the threshold value X (Lvalue ≤ X).

By performing the above processing, in the second power supply control processing, the actions of part of the in-vehicle devices 14A to 14C serving as the action loads are restricted with using three parameters of the high voltage battery electric power amount, the low voltage battery electric power amount, and the drive motor electric power required amount, so that the output electric power of the high voltage battery 11 can be suppressed.

[Third Embodiment]

Next, third power supply control processing serving as a third embodiment of the present invention will be described.

In the second power supply control processing, the actions of part of the in-vehicle devices 14 are restricted with using the three parameters of the high voltage battery electric power amount, the low voltage battery electric power amount, and the drive motor electric power required amount, so that the output electric power of the high voltage battery 11 is suppressed.

In the third power supply control processing, the action loads are restricted also in consideration with a total electric power amount at the time of actuating the in-vehicle devices 14A of the priority A and the in-vehicle devices 14B of the priority B in addition to the three parameters. The total electric power amount at the time of actuating the in-vehicle devices 14A of the priority A and the in-vehicle devices 14B of the priority B is called as the DC/DC load electric power required amount.

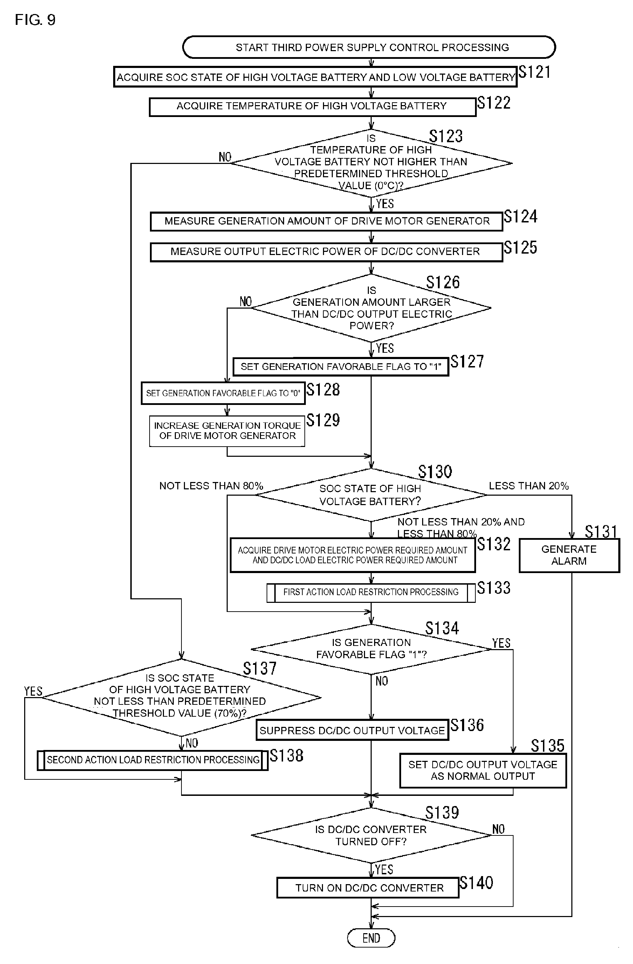

Fig. 9 is a flowchart of the third power supply control processing by the power supply system 1.

The third power supply control processing of Fig. 9 includes processing from Steps S121 to S140, and Steps S121 to S140 respectively correspond to Steps S81 to S100 of Fig. 8.

However, since the action loads are restricted also in consideration with the DC/DC load electric power required amount in the third power supply control processing, the steps relating to that part, specifically Steps S132 and S133 are different from Steps S92 and S93 of Fig. 8.

Thus, only Steps S132 and S133 will be described, and description of the remaining steps will be omitted.

In Step S132, the controller 17 acquires the drive motor electric power required amount from the drive motor 16 and also acquires the DC/DC load electric power required amount from the ECU included in the in-vehicle devices 14A.

In Step S133, the controller 17 executes the first action load restriction processing of restricting the actions of the action loads in accordance with the high voltage battery electric power amount, the low voltage battery electric power amount, the drive motor electric power required amount, and the DC/DC load electric power required amount.

In the first action load restriction processing in the third power supply control processing, the controller determines of which in-vehicle devices 14 the actions are restricted based on a calculation result using an arithmetic expression similar to the expression (3) in the above second power supply control processing.

Specifically, the controller 17 determines whether only the in-vehicle devices 14A of the priority A are actuated or the in-vehicle devices 14A of the priority A and the in-vehicle devices 14B of the priority B are actuated in accordance with the calculation result of the following expression (4).

$$Lvalue = l \times (\text{high voltage battery electric power amount} + \text{low voltage battery electric power amount}) - m \times (\text{drive motor electric power required amount} + \text{DC/DC load electric power required amount}) \dots\dots (4)$$

In the expression (4), "m × (drive motor electric power required amount)" in the expression (3) becomes "m × drive motor electric power required amount + DC/DC load electric power required amount)" in consideration with the DC/DC load electric power required amount. Others are the same.

The controller 17 calculates Lvalue of the expression (4), actuates the in-vehicle devices 14A and the in-vehicle devices 14B when Lvalue is larger than the threshold value X (Lvalue > X), and only actuates the in-vehicle devices 14A when Lvalue is not larger than the threshold value X (Lvalue ≤ X).

By performing the above processing, in the third power supply control processing, the actions of part of the in-vehicle devices 14A to 14C serving as the action loads are restricted with using four parameters of the high voltage battery electric power amount, the low voltage battery electric power amount, the drive motor electric power required amount, and the DC/DC load electric power required amount, so that the output electric power of the high voltage battery 11 can be suppressed.

According to the first to third power supply control processing of the power supply system 1 described above, when the temperature of the high voltage battery 11 becomes a low temperature due to a decrease in an external temperature or the like, the supply of the electric power to part of the in-vehicle devices 14 is restricted in accordance with the priority thereof. Specifically, the power supply system 1 classifies the in-vehicle devices into the in-vehicle devices 14 essential to the safe vehicle actions and other in-vehicle devices 14, and preferentially drives the in-vehicle devices 14A of the priority A essential to the safe vehicle actions in accordance with the high voltage battery electric power amount, the drive motor electric power required amount, and the like.

Thereby, the output electric power can be suppressed corresponding to a decrease in the electric power that the high voltage battery 11 is able to output when the temperature of the high voltage battery 11 becomes a low temperature. Thus, the life of the high voltage battery can be extended while ensuring the minimum electric power required for the vehicle actions.

The present invention can be applied to a power supply system for controlling a power supply of a battery in a vehicle using the battery as part of a power source or as the entire power source such as an electric vehicle and a hybrid vehicle.

A series of the above processing can be executed by hardware or by software. When the series of the processing is executed by the software, a program of the software is provided and installed on a computer built into dedicated hardware (such as a CPU (Central Processing Unit), an ECU, a BMU (Battery Management Unit)), or for example a general-purpose personal computer capable of executing various functions with various programs installed, via a program recording medium, or a wired or wireless transmission medium such as local area network, internet, and digital satellite broadcasting.

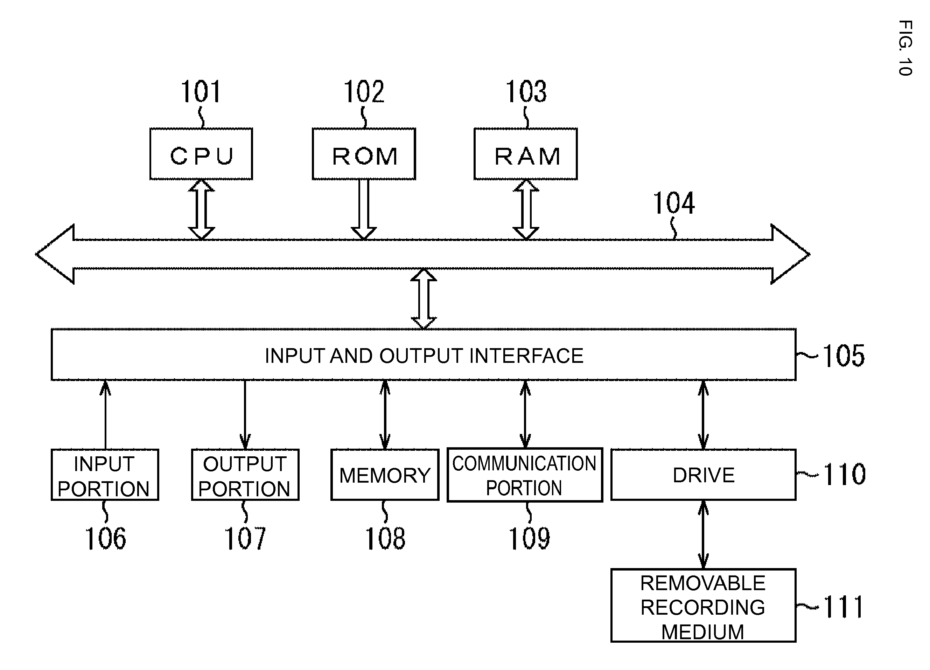

Fig. 10 is a block diagram showing a configuration example of the hardware of the computer serving as the controller 17 for executing the series of the above processing by the program.

In the computer, a CPU (Central Processing Unit) 101, a ROM (Read Only Memory) 102, and a RAM (Random Access Memory) 103 are connected to each other by a bus 104.

An input and output interface 105 is further connected to the bus 104. An input portion 106, an output portion 107, a memory 108, a communication portion 109, and a drive 110 are connected to the input and output interface 105.

The input portion 106 includes a keyboard, a mouse, a microphone, and the like. The output portion 107 includes a display, a speaker, and the like. The memory 108 includes a hard disk, a nonvolatile memory, and the like. The communication portion 109 includes a network interface and the like. The drive 110 drives a removable recording medium 111 such as a magnetic disk, an optical disc, a magnet-optical disc, or a semiconductor memory.

In the computer formed as above, the CPU 101 loads and executes the program stored in the memory 108 for example to the RAM 103 via the input and output interface 105 and the bus 104, so that the series of the above processing is performed.

The program executed by the computer (the CPU 101) can be recorded and provided for example in the removable recording medium 111 serving as a package medium or the like. The program can also be provided via the wired or wireless transmission medium such as the local area network, the internet, and the digital satellite broadcasting.

In the computer, the removable recording medium 111 is mounted onto the drive 110, so that the program can be installed on the memory 108 via the input and output interface 105. The program can be received by the communication portion 109 via the wired or wireless transmission medium and installed on the memory 108. In addition, the program can be preliminarily installed on the ROM 102 or the memory 108.

It should be noted that the program executed by the computer may be a program with processing performed in chronological order along the order described in the present specification, or a program with processing performed in parallel or at necessary timing such as when a call is placed.

It should be noted that in the present specification, the system indicates the entire apparatus formed by a plurality of devices.

**Claims**

1. A power supply system (1), comprising:

   - a first battery (11) for supplying an electric power at first voltage;
   - a second battery (15) for supplying an electric power at second voltage lower than the first voltage;
   - a voltage converting unit (13) connected to the first battery (11) and to the second battery (15), and intended to receive the electric current from the first battery (11), to convert the first voltage of the electric current into the second voltage, and then to supply the electric current to the second battery (15);
   - a measuring unit (12) for measuring a temperature of the first battery (11);
   - one or a plurality of first loads (14A) driven by the second battery (15);
   - one or a plurality of second loads (14B, 14C) driven by the second battery (15); and
   - a control unit (17) for driving in priority the first loads (14A) based on an electric power amount that the first battery (11) is able to output and on an electric power amount required by a drive motor (16) for driving a vehicle, when the temperature of the first battery (11) is not higher than a predetermined temperature.

2. The power supply system (1) according to claim 1, wherein the control unit (17) restricts the supply of the electric power to a part of a plurality of loads driven by the first battery (11) other than the drive motor (16) based only on the electric power amount that the first battery (11) is able to output, when the temperature of the first battery (11) is higher than the predetermined temperature.

3. The power supply system (1) according to claim 1, wherein the control unit (17) suppresses the output voltage of the voltage converting unit (13) in accordance with at least a state of charge of the second battery (15) and a maximum voltage among the drive voltage of a plurality of loads driven by the first battery (11) other than the drive motor (16).

4. A power supply control method in a power supply system (1) comprising a first battery (11) for supplying an electric power at a first voltage; a second battery (15) for supplying an electric power at a second voltage lower than the first voltage; a voltage converting unit (13) connected to the first battery (11) and to the second battery (15) and intended to receive the electric current from the first battery (11), to convert the first voltage of the electric current into the second voltage, and then to supply the electric current to the second battery (15); a measuring unit (12) for measuring a temperature of the first battery (11); one or a plurality of first loads (14A) driven by the second battery (15); one or a plurality of second loads (14B, 14C) driven by the second battery (15); and a control unit (17) for controlling the drive of the first loads (14A) and of the second loads (14B, 14C);

   wherein the power supply control method comprises the step of driving in priority the first loads (14A) by the control unit (17) based on an electric power amount that the first battery (11) is able to output and on an electric power amount required by a drive motor (16) for driving a vehicle, when the temperature of the first battery (11) is not higher than a predetermined temperature.

FIG. 1

DISCHARGE TEMPERATURE CHARACTERISTICS

NOMINAL CAPACITY: 2,000 mAh
DISCHARGE CURRENT: 02C (400 mA)

20°C
45°C
60°C
−0°C
−20°C

VOLTAGE (V)

CAPACITY (mAh)

FIG. 2

FIG. 3

FIG. 4

| | | DRIVE MOTOR ELECTRIC POWER REQUIRED AMOUNT | | |
| --- | --- | --- | --- | --- |
| | | LARGE | MEDIUM | SMALL |
| HIGH VOLTAGE BATTERY ELECTRIC POWER AMOUNT | HIGH | A, B | A, B | A, B |
| | MEDIUM | A | A, B | A, B |
| | LOW | A | A | A, B |

FIG. 5

START FIRST ACTION LOAD
RESTRICTION PROCESSING

S41
HIGH VOLTAGE BATTERY ELECTRIC POWER AMOUNT?

HIGH → LOW

MEDIUM

S42
DRIVE MOTOR ELECTRIC POWER REQUIRED AMOUNT?

MEDIUM OR SMALL

LARGE

S43
DRIVE MOTOR ELECTRIC POWER REQUIRED AMOUNT?

SMALL

LARGE OR MEDIUM

PERMIT ACTION OF IN-VEHICLE DEVICE OF PRIORITY B OR HIGHER    S44

PERMIT ACTION OF IN-VEHICLE DEVICE OF PRIORITY A    S45

RETURN

FIG. 6

| | HIGH VOLTAGE BATTERY ELECTRIC POWER AMOUNT | |
| --- | --- | --- |
| | MEDIUM | LOW |
| ACTION LOAD | A, B | A |

FIG. 7

FIG. 8

```
                    ( START SECOND POWER SUPPLY CONTROL PROCESSING )
                                          │
                                          ▼
        ┌──────────────────────────────────────────────────────────────┐ S81
        │ ACQUIRE SOC STATE OF HIGH VOLTAGE BATTERY AND LOW VOLTAGE BATTERY │
        └──────────────────────────────────────────────────────────────┘
                                          │
                                          ▼
              ┌───────────────────────────────────────────┐ S82
              │ ACQUIRE TEMPERATURE OF HIGH VOLTAGE BATTERY │
              └───────────────────────────────────────────┘
                                          │
                                          ▼
                                        ╱  IS  ╲ S83
                                      ╱ TEMPERATURE OF HIGH ╲
                NO                  ╱ VOLTAGE BATTERY NOT HIGHER THAN ╲
          ◀──────────────────────◀   PREDETERMINED THRESHOLD   ╲
                                      ╲    VALUE (0°C)?    ╱
                                        ╲            ╱
                                           │ YES
                                           ▼
            ┌─────────────────────────────────────────────────┐ S84
            │ MEASURE GENERATION AMOUNT OF DRIVE MOTOR GENERATOR │
            └─────────────────────────────────────────────────┘
                                           │
                                           ▼
              ┌───────────────────────────────────────────┐ S85
              │ MEASURE OUTPUT ELECTRIC POWER OF DC/DC CONVERTER │
              └───────────────────────────────────────────┘
                                           │
                                           ▼
                                         ╱  IS  ╲ S86
                    NO                 ╱ GENERATION AMOUNT LARGER ╲
              ◀──────────────────────◀  THAN DC/DC OUTPUT ELECTRIC ╲
                                         ╲    POWER?    ╱
                                            │ YES
                                            ▼
                     ┌──────────────────────────────────┐ S87
                     │ SET GENERATION FAVORABLE FLAG TO "1" │
                     └──────────────────────────────────┘
          ┌──────────────────────────────────┐ S88
          │ SET GENERATION FAVORABLE FLAG TO "0" │
          └──────────────────────────────────┘
                          │
                          ▼
          ┌────────────────────┐ S89
          │ INCREASE GENERATION TORQUE │
          │  OF DRIVE MOTOR GENERATOR │
          └────────────────────┘
                          │
                          └──────────────────────────►
                                            │
                                            ▼
        NOT LESS THAN 80%              ╱ S90 ╲              LESS THAN 20%
      ◀──────────────────────────────◀ SOC STATE OF HIGH ╲──────────────────────►
                                       ╲ VOLTAGE BATTERY? ╱
                                            │
                                NOT LESS THAN 20% AND
                                   LESS THAN 80%
                                            ▼
                   ┌──────────────────────────────────────┐ S92           ┌──────────┐ S91
                   │ ACQUIRE DRIVE MOTOR ELECTRIC POWER REQUIRED AMOUNT │      │ GENERATE │
                   └──────────────────────────────────────┘           │  ALARM   │
                                            │                          └──────────┘
                                            ▼
                     ┌──────────────────────────────────┐ S93
                     │ FIRST ACTION LOAD RESTRICTION PROCESSING │
                     └──────────────────────────────────┘
                                            │
                                            ▼
                                         ╱ S94 ╲              YES
                                       ╱ IS GENERATION ╲──────────────────────►
                                       ╲ FAVORABLE FLAG "1"? ╱
          ╱ S97 ╲                          │ NO
        ╱ IS SOC STATE ╲                   ▼
    YES ╱ OF HIGH VOLTAGE BATTERY ╲    ┌────────────────────────┐ S96
  ◀────◀ NOT LESS THAN PREDETERMINED ╲  │ SUPPRESS DC/DC OUTPUT VOLTAGE │
        ╲ THRESHOLD VALUE (70%)? ╱      └────────────────────────┘               ┌────────────────────┐ S95
           │ NO                                         │                        │ SET DC/DC OUTPUT VOLTAGE │
           ▼                                             │                        │   AS NORMAL OUTPUT  │
  ┌──────────────────────────────────┐ S98              │                        └────────────────────┘
  │ SECOND ACTION LOAD RESTRICTION PROCESSING │          │
  └──────────────────────────────────┘                  │
                          │                              ▼
                          └──────────────────────────────┐
                                            │
                                            ▼
                                         ╱ S99 ╲              NO
                                       ╱ IS DC/DC CONVERTER ╲──────────────────────►
                                       ╲ TURNED OFF? ╱
                                            │ YES
                                            ▼
                           ┌────────────────────────┐ S100
                           │ TURN ON DC/DC CONVERTER │
                           └────────────────────────┘
                                            │
                                            ▼
                                         ( END )
```

FIG. 9

START THIRD POWER SUPPLY CONTROL PROCESSING

ACQUIRE SOC STATE OF HIGH VOLTAGE BATTERY AND LOW VOLTAGE BATTERY — S121

ACQUIRE TEMPERATURE OF HIGH VOLTAGE BATTERY — S122

S123 — IS TEMPERATURE OF HIGH VOLTAGE BATTERY NOT HIGHER THAN PREDETERMINED THRESHOLD VALUE (0°C)? — NO / YES

MEASURE GENERATION AMOUNT OF DRIVE MOTOR GENERATOR — S124

MEASURE OUTPUT ELECTRIC POWER OF DC/DC CONVERTER — S125

S126 — IS GENERATION AMOUNT LARGER THAN DC/DC OUTPUT ELECTRIC POWER? — NO / YES

SET GENERATION FAVORABLE FLAG TO "1" — S127

SET GENERATION FAVORABLE FLAG TO "0" — S128

INCREASE GENERATION TORQUE OF DRIVE MOTOR GENERATOR — S129

S130 — SOC STATE OF HIGH VOLTAGE BATTERY? — NOT LESS THAN 80% / NOT LESS THAN 20% AND LESS THAN 80% / LESS THAN 20%

ACQUIRE DRIVE MOTOR ELECTRIC POWER REQUIRED AMOUNT AND DC/DC LOAD ELECTRIC POWER REQUIRED AMOUNT — S132

GENERATE ALARM — S131

FIRST ACTION LOAD RESTRICTION PROCESSING — S133

S134 — IS GENERATION FAVORABLE FLAG "1"? — YES / NO

S137 — IS SOC STATE OF HIGH VOLTAGE BATTERY NOT LESS THAN PREDETERMINED THRESHOLD VALUE (70%)? — YES / NO

SUPPRESS DC/DC OUTPUT VOLTAGE — S136

SECOND ACTION LOAD RESTRICTION PROCESSING — S138

SET DC/DC OUTPUT VOLTAGE AS NORMAL OUTPUT — S135

S139 — IS DC/DC CONVERTER TURNED OFF? — NO / YES

TURN ON DC/DC CONVERTER — S140

END

FIG. 10

**EP 2 365 603 A2**

**REFERENCES CITED IN THE DESCRIPTION**

**Patent documents cited in the description**

• JP 3566252 B